# EUROPÄISCHE PATENTANMELDUNG

(11) **EP 1 837 978 A1**
(43) Veröffentlichungstag der Anmeldung: **26.09.2007**
(21) Anmeldenummer: 07004491.2
(22) Anmeldetag: 05.03.2007
(51) Int. Cl.: H02K 5/04, H02K 7/14

(54) **Gehäuse für einen Lüftermotor**

(30) Priorität: 22.03.2006 DE 102006013225
(71) Anmelder: ABM Greiffenberger Antriebstechnik GmbH, 95615 Marktredwitz (DE)
(72) Erfinder: Rögner, Werner, 95659 Arzberg (DE)
(74) Vertreter: Thun, Clemens

(57) **Zusammenfassung**

Die Erfindung betrifft ein Gehäuse (2) für einen Lüftermotor (1) mit einem Befestigungsflansch (27). Der Befestigungsflansch (27) ist an einem äußeren Umfang eines Luftleitrings (4) ausgebildet und der Luftleitring (4) ist über zumindest zwei Rippen (5, 5') mit einem Aufnahmekörper (3) zur Aufnahme eines Elektromotors verbunden.

## Beschreibung

Die Erfindung betrifft ein Gehäuse für einen Lüftermotor.

Lüftermotoren weisen in der Regel ein etwa topfförmiges Gehäuse auf, an dem unmittelbar ein Flansch zur Befestigung des Lüftermotors angeordnet ist. Einseitig aus dem Gehäuse ragt eine Antriebswelle heraus, an der ein Lüfter, beispielsweise eines Radialgebläses, angeordnet ist. Damit liegt das Gehäuse des Lüftermotors im Ansaugbereich, wobei zur Verbesserung der Strömungsverhältnisse um das Gehäuse herum zusätzlich ein Luftleitring angeordnet ist. Die Befestigung des Luftleitrings und des Gehäuses des Lüftermotors erfolgt in der Regel unabhängig voneinander. Dies bedeutet jedoch, dass in dem Ansaugquerschnitt Halterungen vorgesehen sind, mit denen das Gehäuse des Lüftermotors in einer Anlage, beispielsweise einer Waschstraße, fixiert wird. Das Vorsehen des Flansches unmittelbar an dem Gehäuse führt dabei einerseits zu einer Vergrößerung der radialen Ausdehnung des Lüftermotors und hat andererseits den Nachteil, dass für den Lüftermotor sowie für den Luftleitring separate Befestigungsvorrichtungen vorgesehen sein müssen. Axial aufeinander folgende Anordnungen des Luftleitrings und des Lüftermotors führen dagegen zu einer Vergrößerung der Baulänge, was wiederum den Nachteil mit sich bringt, dass aufgrund des ungünstig gelagerten Schwerpunkts eine Unwucht des Lüfterrads zu starken Schwingungen der Gesamtanordnung führen kann. Da derartige Unwuchten über die Betriebszeit des Lüftermotors hinweg nahezu kaum zu vermeiden sind, stellt dies ein gravierendes Problem dar.

Die Erfindung hat die Aufgabe, ein Gehäuse für einen Lüftermotor zu schaffen, so dass eine kompakte Anordnung des Gehäuses mit samt einem Luftleitring möglich ist.

Die Aufgabe wird durch das erfindungsgemäße Gehäuse mit den Merkmalen des Anspruchs 1 gelöst.

Nach Anspruch 1 umfasst ein Gehäuse für einen Lüftermotor einen Befestigungsflansch. Der Befestigungsflansch ist erfindungsgemäß an einem äußeren Umfang eines Luftleitrings ausgebildet. Dieser Luftleitring ist über zumindest zwei Rippen mit einem Aufnahmekörper zur Aufnahme eines Elektromotors verbunden.

Damit kann der Befestigungsflansch direkt an dem Aufnahmekörper für den Elektromotor entfallen. Die erfindungsgemäße Lösung ermöglicht es, lediglich einen gemeinsamen Befestigungsflansch für den Luftleitring und den Elektromotor vorzusehen. Da der Befestigungsflansch am äußeren Umfang des Luftleitrings angeordnet ist, sind zusätzliche Halterungen, welche sich im Ansaugquerschnitt befinden und den Aufnahmekörper des Gehäuses für den Elektromotor halten, entbehrlich. Die Fixierung des Aufnahmekörpers für den Elektromotor an dem Luftleitring erfolgt über zumindest zwei Rippen, welche den Befestigungsflansch bzw. den Luftleitring mit dem Aufnahmekörper verbinden. Die erfindungsgemäße Lösung hat zudem den Vorteil, dass in einfacher Weise der gesamte Lüftermotor in eine Anlage integriert werden kann, wobei eine lagerichtige Positionierung des Aufnahmekörpers des Elektromotors relativ zu dem Luftleitring automatisch gewährleistet ist.

In den Unteransprüchen sind vorteilhafte Weiterbildungen des erfindungsgemäßen Gehäuses für einen Lüftermotor ausgeführt.

Insbesondere ist es vorteilhaft, das Gehäuse einstückig als ein Gussteil auszubilden, wobei es besonders vorteilhaft ist, das Gehäuse als Metall-Gussteil auszubilden. Die Ausbildung des Luftleitrings einteilig mit dem Aufnahmekörper für den Elektromotor hat den Vorteil, dass sich eine besonders hohe Kühlleistung ergibt. Durch den Luftleitring wird die angesaugte Luft zwischen dem Luftleitring und dem Aufnahmekörper entlang geleitet, so dass einerseits das am höchsten Wärme belastetete Gehäuseteil unmittelbar im Luftstrom liegt und andererseits beim Ausbilden als Metall-Gussteil eine Wärmeleitung über die Rippen hin zu dem Luftleitring erfolgt. Damit kann die Wärme über eine große Oberfläche abgegeben werden. Alternativ hierzu kann der Luftleitring auch ein separates Bauteil bilden, wobei in diesem Fall dann die Rippen an ihrer Innenseite über eine Hülse miteinander verbunden sind, welche auf die Mantelfläche des Aufnahmekörpers - z.B. durch Verkleben und/oder Aufschrumpfen - aufgebracht ist.

Weiterhin ist es vorteilhaft, den Luftleitring trichterförmig mit einem Halsteil und einem Befestigungsflansch auszubilden, wobei sich das Halsteil in axialer Richtung und der Befestigungsflansch sich in radialer Richtung erstreckt. Das Halsteil orientiert sich damit parallel zur Achse des topfförmig ausgebildeten Aufnahmekörpers und durch den sich in radialer Richtung erstreckenden Befestigungsflansch ist eine einfache Montage an einer ebenen Fläche in einer Anlage möglich.

Vorteilhafterweise sind der Befestigungsflansch und das Halsteil des Luftleitrings durch einen Luftleitabschnitt miteinander verbunden. Dabei sind insbesondere die Rippen mit dem Luftleitabschnitt des Luftleitrings verbunden und sorgen somit für eine zusätzliche Versteifung des Luftleitrings.

Die mehreren Rippen, mit denen der Luftleitring mit dem Aufnahmekörper verbunden ist, weisen vorteilhafterweise zumindest teilweise einen Rippenkern auf, welcher sich von einem Übergang zwischen dem Halsteil und dem Luftleitabschnitt zu dem Aufnahmekörper hin erstreckt. Die Rippenkerne der mehreren Rippen liegen dabei vorzugsweise auf einem gedachten bzw. fiktiven Kegelmantel, welcher sich in Richtung auf den Boden des Aufnahmekörpers zu öffnet. Auf der Seite des Aufnahmekörpers ist zumindest ein Teil der Rippenkerne vorzugsweise in einem Bereich erhöhter Wandstärke mit dem Aufnahmekörper verbunden. Da die Rippenkerne zu dem Aufnahmekörper einen Winkel einschließen, sorgt die Anordnung in einem Bereich erhöhter Wandstärke für eine größere Sicherheit hinsichtlich einer Kerbwirkung im Fall von auftretenden Vibrationen.

Zudem bieten die Bereiche erhöhter Wandstärke gleichzeitig eine geeignete Stelle zur Aufnahme von Befestigungsmitteln zur Fixierung eines Gehäusedeckels. Die Bereiche erhöhter Wandstärke sind hierzu an dem offenen Ende des topfförmigen Aufnahmekörpers angeordnet und erstrecken sich bis zu einer Stirnfläche des Aufnahmekörpers.

Vorzugsweise umfassen zumindest diejenigen Rippen, die einen Rippenkern aufweisen, einen vorderen Rippenteil und/oder einen hinteren Rippenteil. Der vordere Rippenteil erstreckt sich dabei von dem Rippenkern hin zu dem Luftleitabschnitt des Luftleitrings. Der hintere Rippenteil erstreckt sich von dem Rippenkern zu dem Aufnahmekörper hin. Die Kontaktlinie des hinteren Rippenteils an dem Aufnahmekörper erstreckt sich vorzugsweise in axialer Richtung bezüglich der Längsachse des Aufnahmekörpers.

Um ein leichtes Entformen des einteilig ausgebildeten Gehäuses nach dem Gießen zu ermöglichen, sind die vorderen Rippenteile ausgehend von dem Übergang zwischen dem Halsteil und dem Luftleitabschnitt des Luftleitrings zu ihrer vorderen Stirnkante hin verjüngt.

Dementsprechend sind auch die hinteren Rippenteile ausgehend von der Verbindungsstelle der Rippenkerne mit dem Aufnahmekörper zu ihrer hinteren Stirnkante hin ebenfalls verjüngt. Eine solche sich verjüngende Ausprägung der vorderen Rippenteile und der hinteren Rippenteile ermöglicht die Verwendung einer einfachen, zweiteiligen Gussform. Weiterhin ist es hierfür vorteilhaft, den Innenumfang des Halsteils in Richtung zu dem Gehäuseboden hin konisch zu erweitern. Der Außenumfang des Halsteils ist ebenfalls konisch ausgebildet, weist allerdings im Vergleich zu dem Innenumfang eine geringere Konizität auf.

Weiterhin ist es vorteilhaft, zur Versteifung an dem Außenumfang des Halsteils und/oder dem Luftleitabschnitt an seiner von dem Aufnahmekörper abgewandten Seite Versteifungsrippen anzuordnen. Die Anzahl der Versteifungsrippen kann dabei von der Anzahl der Verbindungsrippen des Luftleitrings mit dem Aufnahmekörper abweichen.

Bevorzugte Ausführungsformen des erfindungsgemäßen Gehäuses für einen Lüftermotor sind in den Zeichnungen vereinfacht dargestellt und werden in der nachfolgenden Beschreibung näher erläutert. Es zeigen:
- Fig. 1: einen Teilschnitt durch einen Lüftermotor mit einem erfindungsgemäßen Gehäuse gemäß einem ersten Ausführungsbeispiel;
- Fig. 2: einen Teilschnitt durch einen Lüftermotor mit einem zweiten Ausführungsbeispiel eines erfindungsgemäßen Gehäuses;
- Fig. 3: eine Draufsicht auf einen Lüftermotor mit einem erfindungsgemäßen Gehäuse;
- Fig. 4: eine Draufsicht auf das zweite Ausführungsbeispiel für einen Lüftermotor mit einem erfindungsgemäßen Gehäuse und
- Fig. 5: einen Teilschnitt durch einen Lüftermotor mit einem erfindungsgemäßen Gehäuse gemäß einem dritten Ausführungsbeispiel.

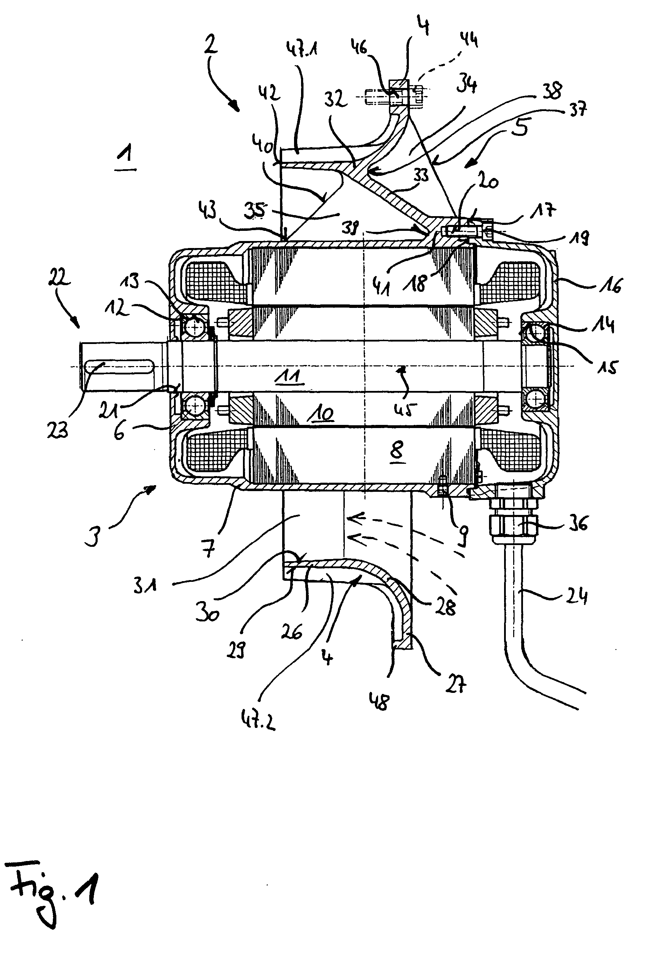

In der Fig. 1 ist ein Teilschnitt in Längsrichtung durch einen Lüftermotor 1 dargestellt. Der Lüftermotor umfasst ein Gehäuse 2, das einen Aufnahmekörper 3 zur Aufnahme der elektrischen Bauteile des Motors sowie einen Luftleitring 4 aufweist. Der Aufnahmekörper 3 und der Luftleitring 4 sind über zumindest zwei Rippen 5 miteinander verbunden. In der Fig. 1 liegt der Schnitt so, dass lediglich eine Rippe 5 als Teilschnitt dargestellt ist.

Der Aufnahmekörper 3 ist im Wesentlichen topfförmig ausgebildet und weist einen Gehäuseboden 6 und einen damit verbundenen Gehäusemantel 7 auf. Der Aufnahmekörper 3 mit dem Gehäuseboden 6 und dem Gehäusemantel 7 bildet somit einen einseitig offenen Raum aus, in dem ein Stator 8 des Elektromotors angeordnet ist. Der Stator 8 ist gegen Verdrehen mit Hilfe eines Gewindestifts 9 gesichert. Der Gewindestift 9 ist in ein korrespondierendes Gewinde eingeschraubt, welches in dem Gehäusemantel 7 angeordnet ist. Der Gewindestift 9 steht auf der Innenseite des Gehäusemantels 7 über die Wandung heraus und greift in eine entsprechende Ausnehmung in dem Stator 8 ein.

In dem Innenraum des Aufnahmekörpers 3 ist ferner ein Rotor 10 angeordnet, der drehfest mit einer Welle 11 verbunden ist. Die Welle 11 ist mittels eines ersten Lagers 12 in dem Aufnahmekörper 3 drehbar gelagert. Das erste Lager 12 ist in einem ersten Lagersitz 13 angeordnet, der in dem Gehäuseboden 6 ausgebildet ist. Der erste Lagersitz 13 ist vorzugsweise als kreisförmige, abgestufte Ausnehmung im Gehäuseboden 6 ausgebildet.

Die Welle 11 ist ferner an dem dem ersten Lager 12 gegenüberliegenden Wellenende in einem zweiten Lager 14 drehbar gelagert. Das zweite Lager 14 ist in einem zweiten Lagersitz 15 angeordnet, der ebenfalls als kreisförmige Ausnehmung in einem Lagerschild 16 angeordnet ist. Die Ausnehmung ist abgestuft und als Sackloch in dem Lagerschild 16 angeordnet. Das Lagerschild 16 wird zum Verschließen des Gehäuses 2 gegen eine Stirnfläche 17 des Aufnahmekörpers 3 fixiert. Das Lagerschild 16 weist hierzu eine Anlagefläche 18 auf, die ebenfalls eben ausgebildet ist und in Anlage mit der Stirnfläche 17 gebracht wird. Zum Fixieren des Lagerschilds 16 an dem Aufnahmekörper 3 sind Schrauben 19 vorgesehen, von denen wiederum lediglich eine Schraube 19 in der Fig. 1 sichtbar in dem gewählten Schnitt liegt. Zur Fixierung der Schrauben 19 sind in dem Aufnahmekörper 3 mehrere Sacklöcher 20 ausgebildet, in die ein Gewinde eingebracht ist.

Während der zweite Lagersitz 15 in einem Sackloch des Lagerschilds 16 angeordnet ist, ist auf der gegenüberliegenden Seite in dem Aufnahmekörper 3 eine Durchgangsöffnung 21 ausgebildet, welche konzentrisch zu dem ersten Lagersitz 13 angeordnet ist. Durch die Durchgangsöffnung 21 ragt ein Teil der Welle 11 heraus und bildet außerhalb des Aufnahmekörpers 3 ein freies Wellenende 22. An dem freien Wellenende 22 ist beispielsweise ein Lüfterrad für einen Radiallüfter angeordnet. Um das Lüfterrad gegen Verdrehen relativ zu dem freien Wellenende 22 zu verhindern, ist eine Nut 23 zur Aufnahme einer Passfeder in dem freien Wellenende 22 ausgebildet.

Das Lagerschild 16 ist kappenförmig ausgebildet und weist seitlich eine Öffnung auf, über die eine Anschlussleitung 24 zugeführt wird. Die Anschlussleitung 24 ist mit einer Kabelverschraubung 36 an dem Lagerschild 16 befestigt und so gegen unbeabsichtigte Einwirkung einer Zugkraft an der Anschlussleitung 24 gesichert.

Erfindungsgemäß weist das Gehäuse 2 neben dem Aufnahmekörper 3 auch einen Luftleitring 4 auf. Der Luftleitring 4 weist ein Halsteil 26 sowie einen Befestigungsflansch 27 auf. Der Befestigungsflansch 27 geht kontinuierlich in das Halsteil 26 über, wobei im Übergangsbereich zwischen dem Befestigungsflansch 27 und dem Halsteil 26 ein Luftleitabschnitt 28 ausgebildet ist. In dem in der Fig. 1 dargestellten Schnitt durch den Luftleitring 4 ist zu erkennen, dass das Profil des Luftleitabschnitts 28 im Wesentlichen einem Viertelkreis entspricht. Der Mittelpunkt des Viertelkreises liegt außerhalb des Halsteils 26.

Das Halsteil 26 weist einen Außenumfang 29 mit geringer Konizität sowie einen etwas stärker konisch ausgeführten Innenumfang 30 auf. Der konische Innenumfang 30 öffnet sich in Richtung zu dem Gehäuseboden 6 hin. Die Anordnung des Luftleitrings 4 an dem Aufnahmekörper 3 ist so gewählt, dass der Befestigungsflansch 27 näher an dem offenen Ende des Aufnahmekörpers 3 als an dem Gehäuseboden 6 angeordnet ist und das Halsteil 26 in Richtung des Gehäusebodens weist. Der Luftleitring 4 ist hierbei etwa auf Höhe des Schwerpunkts des Lüftermotors angeordnet, was besondere Vorteile hinsichtlich der Laufeigenschaften des Motors mit sich bringt. Die im Zusammenhang mit dem Stand der Technik beschriebenen Vibrations-Probleme, welche durch Unwuchten in dem Lüfterrad hervorgerufen werden, können nämlich bei dieser Anordnung weitestgehend vermieden werden.

Das Halsteil 26 ist im Durchmesser größer gewählt als der Außenumfang des Gehäusemantels 7. Der Luftleitring 4 und der Aufnahmekörper 3 sind vorzugsweise konzentrisch zueinander angeordnet. Damit entsteht ein Strömungskanal 31, welcher zwischen dem Aufnahmekörper 3 und dem Luftleitring 4 ausgebildet ist und durch den angesaugte Luft zu einem nicht dargestellten Lüfterrad strömt, wie es durch die gestrichelten Pfeile angedeutet ist.

Die Fixierung des Luftleitrings 4 an dem Aufnahmekörper 3 erfolgt mittels der zumindest zwei Rippen 5. In der oberen Hälfte der Fig. 1 ist ein Teilschnitt durch eine solche Rippe 5 dargestellt. Die Rippe 5 weist einen Rippenkern 33 auf, der sich von einem Bereich des Übergangs 32 von dem Halsteil 26 zu dem Luftleitabschnitt 28 zu dem Gehäusemantel 7 hin erstreckt. Der Rippenkern 33 erstreckt sich dabei von dem Übergang 32 in Richtung auf das offene Ende des Aufnahmekörpers 3 zu. Dabei teilt der Rippenkern 33 die Rippe 5 in einen vorderen Rippenteil 34 und einen hinteren Rippenteil 35. Der vordere Rippenteil 34 weist eine vordere Stirnkante 37 auf, welche sich von dem Befestigungsflansch 27 aus hin in Richtung auf die Stirnfläche 17 des Aufnahmekörpers 3 hin erstreckt.

Die Rippe 5 erstreckt sich mit ihrem vorderen Rippenteil 34 und dem hinteren Rippenteil 35 in axialer und radialer Richtung in Bezug auf eine Längsachse 45 des Aufnahmekörpers 3, wobei sich die vordere Stirnkante 37 von dem Gehäusemantel 7 aus in radialer Richtung bis zu dem Befestigungsflansch 27 erstreckt. Die in der Fig. 1 sichtbare Seitenfläche des vorderen Rippenteils 34 füllt den Bereich zwischen dem Luftleitabschnitt 28 und dem Rippenkern 33 aus. Beim Übergang von dem Rippenkern 33 zu dem Luftleitabschnitt 28 ergibt sich dabei eine vordere Rippenbasis 38, welche die in Umfangsrichtung des Lüftermotors 1 größte Dicke des vorderen Rippenteils 34 bildet. Ausgehend von der vorderen Rippenbasis 38 verjüngt sich der vordere Rippenteil 34 in Richtung auf die vordere Stirnkante 37 zu.

Der hintere Rippenteil 35 ist in entsprechender Weise aufgebaut. Der hintere Rippenteil 35 weist daher ebenfalls eine hintere Stirnkante 40 auf, welche sich vom Übergang 38 zu einem Endpunkt 43 an dem Gehäusemantel 7 erstreckt. Bei einem Übergang zwischen dem Rippenkern 33 und dem Gehäusemantel 7 ist in dem hinteren Rippenteil 35 ebenfalls eine hintere Rippenbasis 39 ausgebildet, welche in Umfangsrichtung die größte Dicke des hinteren Rippenteils 35 darstellt. Ausgehend von der hinteren Rippenbasis 39 verjüngt sich somit in Richtung auf die hintere Stirnkante 40 zu der hintere Rippenteil 35.

Sind mehrere Rippen 5 mit Rippenkernen 33 über den Umfang des Gehäuses verteilt angeordnet, so liegen die jeweiligen Rippenkerne 33 auf einem gemeinsamen fiktiven Kegelmantel. Der Kegelmantel öffnet sich in Richtung auf den Gehäuseboden 6 zu. Die vorderen Stirnkanten 37 der mehreren Rippen 5 sind ebenfalls auf einem Kegelmantel angeordnet, welcher sich mit größerem Öffnungswinkel als der Kegelmantel der Rippenkerne 33 ebenfalls in Richtung auf den Gehäuseboden 6 zu öffnet. Die hinteren Stirnkanten 40 sind dagegen auf einem Kegelmantel angeordnet, welcher sich in umgekehrter Richtung öffnet.

Der Radius des Profils des Luftleitabschnitts 28 ist vorzugsweise so gewählt, dass eine Befestigungsebene, welche durch den Befestigungsflansch 27 an seiner dem Gehäuseboden 6 zugewandten Seite festgelegt wird, in axialer Richtung zwischen der durch den Übergang 32 definierten Ebene sowie der durch die Stirnfläche 17 gebildeten Ebene angeordnet ist. In radialer Verlängerung der vorderen Stirnkante 37 nach außen ist in dem Befestigungsflansch 27 bei zumindest einem Teil der Rippen 5 ein Befestigungsloch 46 ausgebildet, durch welches beispielsweise eine Schraube 44 als Befestigungsmittel zur Befestigung des Lüftermotors 1 in einer Anlage vorgesehen ist. Der Befestigungsflansch 27 weist zumindest in dem Bereich, in dem Befestigungslöcher 46 ausgebildet sind, eine gegenüber dem Luftleitabschnitt 28 sowie dem Halsabschnitt 26 erhöhte Materialstärke auf.

Zur Versteifung des Luftleitrings 4 sind vorzugsweise am Außenumfang 29 des Halsteils 26 Versteifungsrippen 47.1 und 47.2 ausgebildet. Die Anzahl der Versteifungsrippen 47 kann dabei von der Anzahl der Rippen 5 abweichen.

Um eine gleichmäßige Auflagefläche an dem äußeren Umfangsrand des Befestigungsflansches 27 zu erreichen, ist ein Kragen 48 in den Bereichen des Befestigungsflansches 27 ausgebildet, in denen keine Befestigungslöcher 46 vorgesehen sind. Der Kragen 48 weist in dieselbe Richtung wie das Halsteil 26. Der Abstand von der Stirnfläche 17 bis zu einem Endpunkt 43, an dem die hintere Stirnkante 40 des hinteren Rippenteils 35 in den Gehäusemantel 7 übergeht, ist vorzugsweise geringfügig kleiner als der Abstand zwischen der Stirnfläche 17 und der Hinterkante 42 des Halsteils 26. Durch die vorgeschlagene Anordnung des Luftleitrings 4 an dem Aufnahmekörper 3 und die Ausbildung dieses Gehäuses 2 als einstückiges Teil, vorzugsweise als Metall-Gussteil, wird eine kompakte Bauform des Lüftermotors 1 erreicht. Insbesondere ist die axiale Ausdehnung kurz, da die Anordnung des Luftleitrings 4 in dem Bereich der axialen Ausdehnung des Gehäusemantels 7 erfolgt. Die Rippenkerne 33 der Rippen 5 laufen vorzugsweise im Bereich der Stirnfläche 17 des Aufnahmekörpers 3 oder nahe der Stirnfläche 17 aus. Vorzugsweise gehen die Rippenkerne 33 dabei in einen Bereich erhöhter Wandstärke 41 über, in dem auch die Sacklöcher 20 angeordnet sind. In dem dargestellten Ausführungsbeispiel ist für jeweils einen Rippenkern 33 ein in Umfangsrichtung begrenzter Bereich 41 mit erhöhter Wandstärke vorgesehen. Die erhöhte Wandstärke des Bereichs 41 kann jedoch ebenfalls als umlaufende Wandstärkenerhöhung ausgebildet sein.

Die sich in Richtung der vorderen Stirnkante 37 bzw. der hinteren Stirnkante 40 verjüngenden vorderen Rippenteile 34 bzw. hinteren Rippenteile 35 ermöglichen die Verwendung einer zweigeteilten Gussform. Eine solche einfache Gussform wiederum reduziert die Herstellungskosten für das einteilige Gehäuse 2 erheblich. Dabei ist insbesondere das Entformen des Gehäuses 2 dadurch begünstigt, dass der Innenumfang 30 des Halsteils 26 sich in Richtung auf den Gehäuseboden 6 hin konisch erweitert und gleichzeitig die hinteren Rippenteile 35 zulaufen.

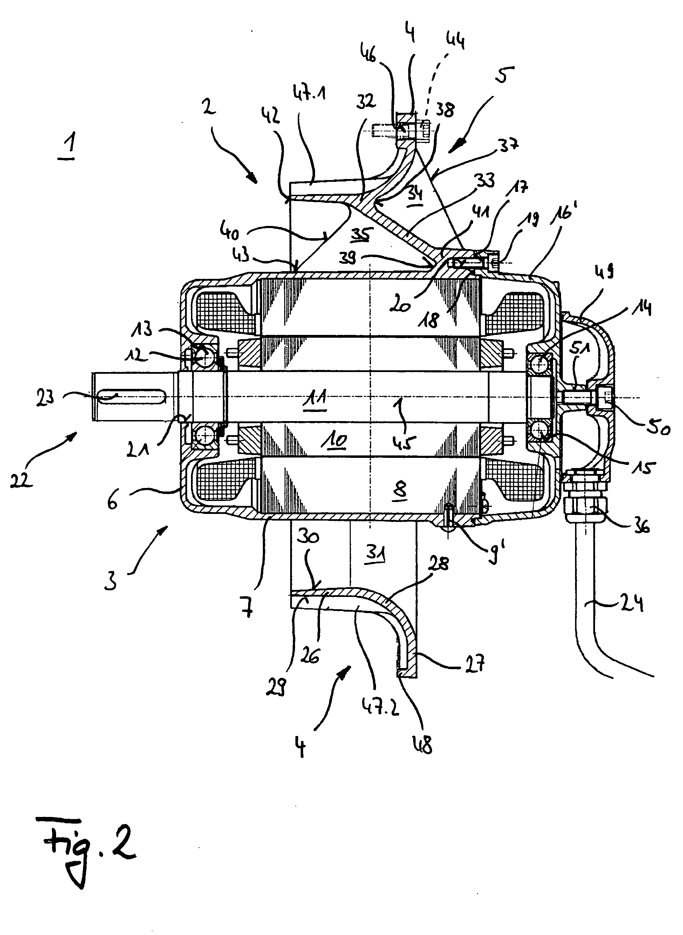

In der Fig. 2 ist ein zweites Ausführungsbeispiel eines Lüftermotors 1' dargestellt. Bei dem Ausführungsbeispiel der Fig. 2 ist die Anschlussleitung 24 nicht seitlich durch das Lagerschild 16 geführt, sondern wird über einen separaten Klemmenkastendeckel 49 zugeführt. Der Klemmenkastendeckel 49 ist zentral mittels einer Schraube an dem Lagerschild 16' fixiert. Das Lagerschild 16' weist zur Aufnahme der Schraube 50 einen Fortsatz 51 auf, in den ein Gewinde eingebracht ist. Ferner erfolgt die Halterung des Stators 8 in dem Aufnahmekörper 3 nunmehr mit Hilfe eines Kerbnagels 9'. Im Übrigen entspricht der Aufbau des Lüftermotors gemäß Fig. 2 dem in der Fig. 1 beschriebenen Aufbau. Um unnötige Wiederholungen zu vermeiden, sind identische Bauteile mit identischen Bezugszeichen versehen und es wird auf eine wiederholte Beschreibung verzichtet.

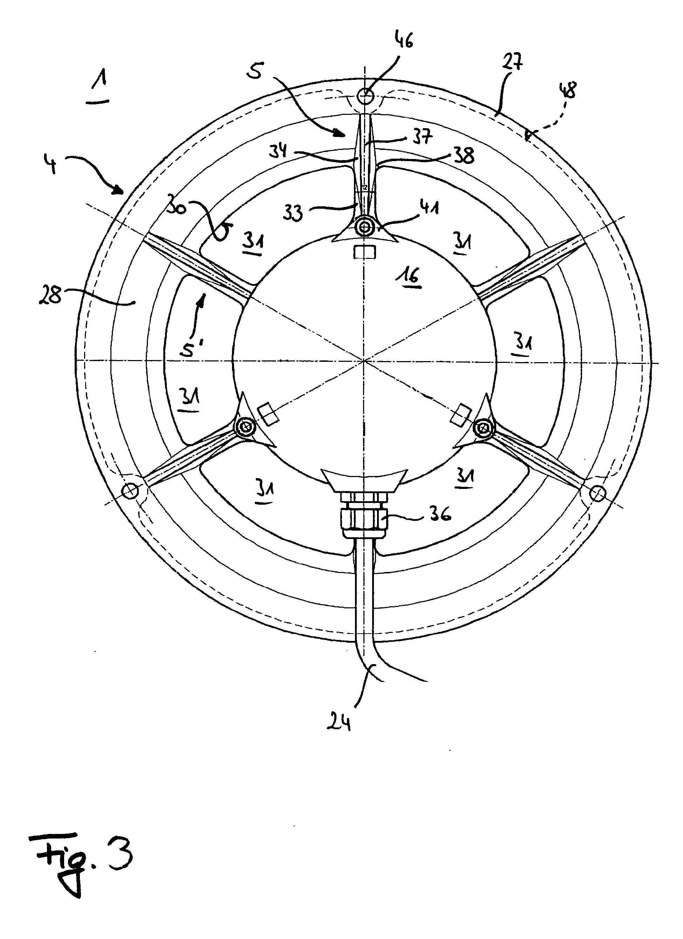

In der Fig. 3 ist eine Draufsicht auf einen Lüftermotor 1 von der Seite des Lagerschilds 16 her dargestellt. Bei dem in der Fig. 3 dargestellten Ausführungsbeispiel sind drei Rippen 5 gleichmäßig über den Umfang verteilt angeordnet, so dass benachbarte Rippen 5 jeweils einen 120°-Winkel miteinander einschließen. Der besseren Übersichtlichkeit wegen sind die Bezugszeichen lediglich für die in der Fig. 3 oben angeordnete Rippe 5 angegeben. Die drei Rippen 5 entsprechen in ihrem Aufbau dem in der Fig. 1 dargestellten und beschriebenen Beispiel für eine Rippe 5. Es ist in der Fig. 3 deutlich zu erkennen, dass ausgehend von der vorderen Stirnkante 37 sich der vordere Rippenteil 34 in Richtung zu seinem Übergang hin zu dem Luftleitabschnitt 28 bzw. zu dem Rippenkern 33 hin verbreitert. Seine breiteste Stelle erreicht der vordere Rippenteil 34 dabei an der vorderen Rippenbasis 38.

Entlang des äußeren Umfangs des Luftleitrings 4 ist mit einer gestrichelten Linie angedeutet der Kragen 48 dargestellt, um eine ebene durchgehende Anlagefläche bei der Montage des Lüftermotors 1 zu erhalten. Zusätzlich zu den drei Rippen 5 sind drei weitere Rippen 5' ausgebildet. Die weiteren Rippen 5' sind ebenfalls gleichmäßig über den Umfang verteilt angeordnet und jeweils in dem Zwischenraum zwischen zwei benachbarten Rippen 5 angeordnet.

Vorzugsweise ist die Anschlussleitung 2 so seitlich aus dem Lagerschild 16 herausgeführt, dass in der Draufsicht eine der weiteren Rippen 5' hinter der Anschlussleitung 24 zu liegen kommt. Die weiteren Rippen 5' unterscheiden sich von den Rippen 5 dadurch, dass in Verlängerung der vorderen Stirnkanten 37' der weiteren Rippen 5' kein Befestigungsloch 46 ausgebildet ist. Ebenso ist beim Übergang des Rippenkern 33' der weiteren Rippen 33 zu dem Aufnahmekörper 3 hin kein Bereich mit erhöhter Wandstärke zur Anordnung eines Sacklochs 20 vorgesehen. Eine solche Ausbildung von weiteren Rippen 5 in den durch die Rippen 5 kann dann realisiert werden, wenn die Gesamtanzahl der Rippen 5, 5' größer ist als die zur Fixierung des Lüftermotors 1 in der Anlage sowie zur Fixierung des Lagerschilds 16 benötigten Schrauben.

Zwischen den einzelnen Rippen 5, 5' ergibt sich jeweils ein Strömungskanal 31.

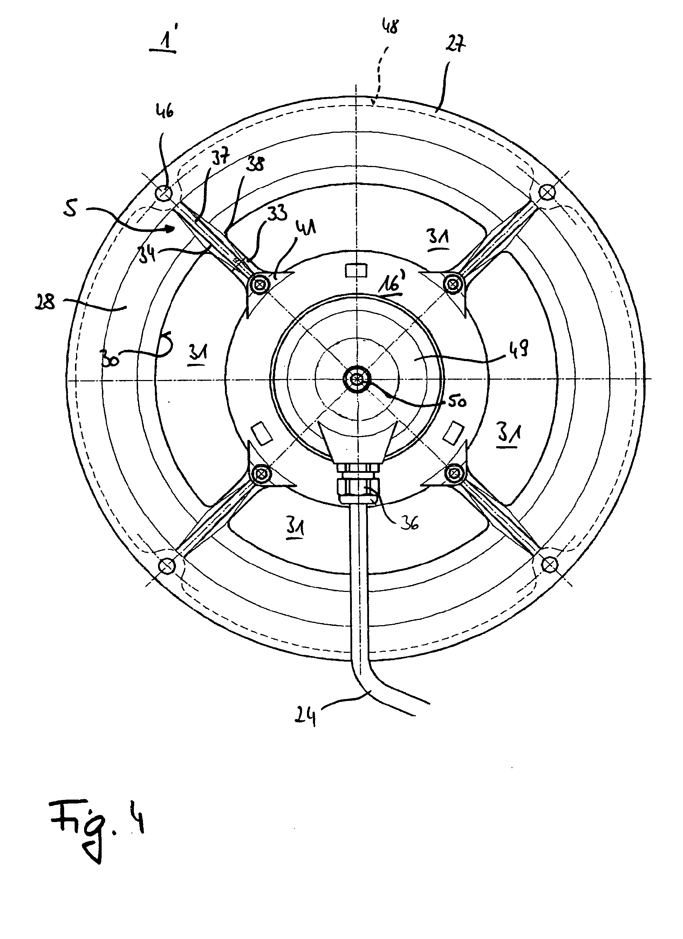

Eine weitere Draufsicht auf das erfindungsgemäße Ausführungsbeispiel gemäß Fig. 2 ist in der Fig. 4 dargestellt. Dabei sind vier Rippen 5 gleichmäßig über den Umfang verteilt angeordnet, wobei jede der Rippen entsprechend der in der Fig. 2 dargestellten Rippe 5 ausgebildet ist. Im Unterschied zu dem vorhergehenden Beispiel der Fig. 3 ist die Anschlussleitung in einem Zwischenraum zwischen zwei benachbarten Rippen 5 angeordnet.

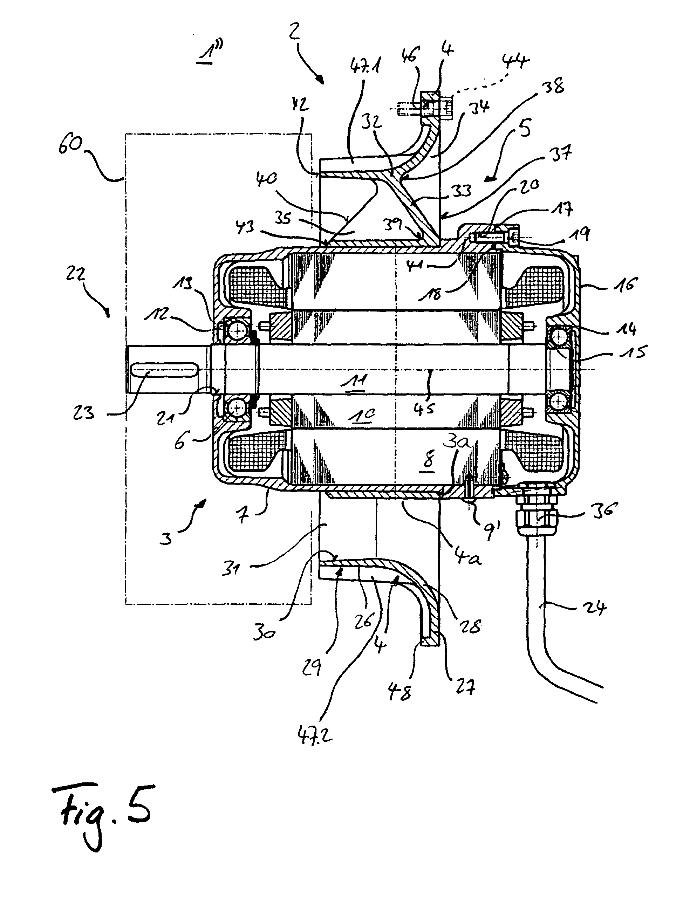

Fig. 5 zeigt schließlich ein drittes Ausführungsbeispiel eines erfindungsgemäßen Lüftermotors 1", wobei identische Bauteile wiederum mit identischen Bezugszeichen versehen sind und im nachfolgenden lediglich die Unterschiede im Vergleich zu den beiden vorherigen Ausführungsbeispielen erläutert werden sollen.

Wesentliches Merkmal dieses dritten Ausführungsbeispiels ist, dass der Aufnahmekörper 3 und der Luftleitring 4 nicht einstückig ausgebildet sind, sondern nunmehr der Luftleitring 4 ein separates Bauteil bildet. Die Verbindung zwischen Aufnahmekörper 3 und Luftleitring 4 erfolgt hierbei dadurch, dass die Rippen 5 an ihrer Innenseite über eine zylinderartige Hülse 4a miteinander verbunden sind, welche an der Mantelfläche des Aufnahmekörpers 3 anliegt. Die Befestigung der Hülse 4a und damit des gesamten Luftleitrings 4 an dem Aufnahmekörper 3 erfolgt durch Verkleben beider Elemente oder durch Aufschrumpfen der Hülse 4a auf den Aufnahmekörper 3. Die Hülse 4a besteht hierzu vorzugsweise aus Aluminium. Um die Anordnung des Luftleitrings 4 auf dem Aufnahmekörper 3 in axialer Richtung weiter zu stabilisieren, weist die Mantelfläche des Aufnahmekörpers 3 eine umlaufende Schulter 3a auf, an welcher die Hülse 4a anliegt. Die Anordnung ist dabei wiederum derart gewählt, dass der Luftleitring 4 in etwa auf der Höhe des Schwerpunkts des Lüftermotors 1" liegt. Die Rippen 5 sind nunmehr derart ausgestaltet, dass die vordere Stirnkante 37 im wesentlichen radial zur Längsachse des Motors verläuft.

Schematisch dargestellt ist in Fig. 5 ferner auch das Lüfterrad 60, wobei gut erkennbar ist, dass sich insgesamt eine sehr kompakte Bauweise insbesondere in axialer Richtung ergibt. Die Anordnung des Lüfterrads bei den zuvor beschriebenen Ausführungsbeispielen erfolgt in gleicher Weise.

Auch bei diesem dritten Ausführungsbeispiel erfolgt die Montage des gesamten Lüftermotors 1" über den Befestigungsflansch 27 des Luftleitrings 4. Es werden also wiederum die gleichen Vorteile erzielt wie bei den Lüftermotoren der Figuren 1 und 2, abgesehen davon, dass der Aufnahmekörper 3 und der Luftleitring 4 nunmehr nicht mehr in einem einzigen Gießvorgang hergestellt werden können. Insbesondere die verbesserten Montagemöglichkeiten sowie die optimierten Laufeigenschaften des Motors bleiben allerdings bestehen.

Die Erfindung ist nicht auf die dargestellten Ausführungsbeispiele beschränkt. Insbesondere ist es möglich, einzelne Merkmale der einzelnen Ausführungsbeispiele oder Merkmale unterschiedlicher Ausführungsbeispiele in beliebiger Weise miteinander zu kombinieren.

## Patentansprüche

1. Gehäuse für einen Lüftermotor (1) mit einem Befestigungsflansch (27), wobei der Befestigungsflansch (27) an einem äußeren Umfang eines Luftleitrings (4) ausgebildet ist und der Luftleitring (4) über zumindest zwei Rippen (5, 5') mit einem Aufnahmekörper (3) zur Aufnahme eines Elektromotors verbunden ist.

2. Gehäuse für einen Lüftermotor nach Anspruch 1,
**dadurch gekennzeichnet,**
**dass** die Rippen (5, 5') den Luftleitring (4) einstückig mit dem Aufnahmekörper (3) verbinden.

3. Gehäuse für einen Lüftermotor nach Anspruch 2,
**dadurch gekennzeichnet,**
**dass** das Gehäuse ein Gussteil ist.

4. Gehäuse für einen Lüftermotor nach Anspruch 3,
**dadurch gekennzeichnet,**
**dass** das Gehäuse ein Metallgussteil ist.

5. Gehäuse für einen Lüftermotor nach Anspruch 1,
**dadurch gekennzeichnet,**
**dass** die Rippen (5, 5') an ihrem inneren Ende über eine Hülse (4a) miteinander verbunden sind, welche an der Mantelfläche des Aufnahmekörpers (3) befestigt ist.

6. Gehäuse für einen Lüftermotor nach Anspruch 5,
**dadurch gekennzeichnet,**
**dass** die Hülse (4a) mit dem Aufnahmekörper (3) verklebt und/oder auf diesen aufgeschrumpft ist.

7. Gehäuse für einen Lüftermotor nach Anspruch 5 oder 6,
**dadurch gekennzeichnet,**
**dass** die Hülse (4a) an einer Schulterfläche (3a) an der Mantelfläche des Aufnahmekörpers (3) in axialer Richtung anliegt.

8. Gehäuse für einen Lüftermotor nach einem der Ansprüche 1-7,
**dadurch gekennzeichnet,**
**dass** der Aufnahmekörper (3) topfförmig mit einem Gehäuseboden (6) und einem Gehäusemantel (7) ausgebildet ist und der Luftleitring (4) trichterförmig mit einem Halsteil (26) und dem Befestigungsflansch (27) ausgebildet ist, wobei das Halsteil (26) sich in axialer Richtung und der Befestigungsflansch (27) sich in radialer Richtung erstreckt.

9. Gehäuse für einen Lüftermotor nach Anspruch 8,
**dadurch gekennzeichnet,**
**dass** das Halsteil (26) und der Befestigungsflansch (27) durch einen Luftleitabschnitt (28) miteinander verbunden sind und die Rippen (5, 5') mit dem Luftleitabschnitt (28) verbunden sind.

10. Gehäuse für einen Lüftermotor nach Anspruch 9,
**dadurch gekennzeichnet,**
**dass** sich von einem Übergang zwischen dem Halsteil (26) und dem Luftleitabschnitt (28) in zumindest einem Teil der Rippen (5, 5') jeweils ein Rippenkern (33) zu dem Aufnahmekörper (3) hin erstreckt, wobei die Rippenkerne (33) auf einem sich in Richtung des Gehäusebodens (6) des Aufnahmekörpers (3) öffnenden Kegelmantel angeordnet sind.

11. Gehäuse für einen Lüftermotor nach Anspruch 10,
**dadurch gekennzeichnet,**
**dass** die Rippenkerne (33) an ihrem aufnahmekörperseitigen Ende zumindest teilweise in einem Bereich (41) erhöhter Wandstärke angeordnet sind.

12. Gehäuse für einen Lüftermotor nach Anspruch 11,
**dadurch gekennzeichnet,**
**dass** der Bereich (41) oder die Bereiche erhöhter Wandstärke zur Aufnahme von Befestigungsmitteln (19) zur Fixierung eines Lagerschilds (16, 16') vorgesehen sind.

13. Gehäuse für einen Lüftermotor nach einem der Ansprüche 10-12,
**dadurch gekennzeichnet,**
**dass** zumindest diejenigen Rippen (5, 5'), die einen Rippenkern (33) aufweisen, einen vorderen Rippenteil (34) und/oder einen hinteren Rippenteil (35) umfassen, wobei der vordere Rippenteil (34) sich von dem Rippenkern (33) zu dem Luftleitabschnitt (28) hin erstreckt und sich der hintere Rippenteil (35) von dem Rippenkern (33) zu dem Aufnahmekörper (3) hin erstreckt.

14. Gehäuse für einen Lüftermotor nach Anspruch 13,
**dadurch gekennzeichnet,**
**dass** sich die vorderen Rippenteile (34) ausgehend von dem Übergang (32) zu ihrer vorderen Stirnkante hin verjüngen

15. Gehäuse für einen Lüftermotor nach Anspruch 13 oder 14,
**dadurch gekennzeichnet,**
**dass** sich die hinteren Rippenteile (35) ausgehend von der Verbindungsstelle der Rippenkerne (33) mit dem Aufnahmekörper (3) zu ihrer hinteren Stirnkante (40) hin verjüngen.

16. Gehäuse für einen Lüftermotor nach einem der Ansprüche 8 - 15,
**dadurch gekennzeichnet,**
**dass** das Halsteil (26) sich an seinem Innenumfang (30) in Richtung zu dem Übergang (32) hin konisch verjüngt.

17. Gehäuse für einen Lüftermotor nach einem der Ansprüche 8 - 16,
**dadurch gekennzeichnet,**
**dass** das Halsteil (26) einen Außenumfang (29) aufweist, der im Vergleich zum Innenumfang (30) eine geringere Konizität aufweist.

18. Gehäuse für einen Lüftermotor nach einem der Ansprüche 8 - 17,
**dadurch gekennzeichnet,**
**dass** an dem Außenumfang (29) des Halsteils (26) und/oder dem Luftleitabschnitt (28) an seiner von dem Aufnahmekörper (3) abgewandten Seite mehrere Versteifungsrippen (47.1, 47.2) angeordnet sind.

19. Lüftermotor (1) mit einem Gehäuse (2) sowie einem in dem Gehäuse (2) befindlichen Motor,
**dadurch gekennzeichnet,**
**dass** das Gehäuse (2) nach einem der vorherigen Ansprüche ausgestaltet ist.
